# EUROPÄISCHE PATENTSCHRIFT

(11) **EP 2 621 195 B1**
(45) Veröffentlichungstag und Bekanntmachung des Hinweises auf die Patenterteilung: **14.11.2018**
(21) Anmeldenummer: 13151725.2
(22) Anmeldetag: 17.01.2013
(51) Int. Cl.: H04Q 11/00, H04J 3/22

(54) **Passive optische Netze mit gemischten Bitraten durch Verwendung eines ganzzahligen Teilers einer Maximaldatenrate für die dynamische Anpassung der Bitrate im laufenden Betrieb**
Passive optical networks with mixed bit rates by the use of an integer divider of a maximum data rate for the dynamic adaptation of bit rate in ongoing operation
Réseaux optiques passifs avec débits binaires mixtes par utilisation d'un diviseur entier d'un débit de données maximal pour adaptation dynamique d'un débit binaire en mode continu

(30) Priorität: 24.01.2012 DE 102012100584
(43) Veröffentlichungstag der Anmeldung: 31.07.2013
(73) Patentinhaber: Deutsche Telekom AG, 53113 Bonn (DE)
(72) Erfinder: Bunge, Christoph-Alexander, 12157 Berlin (DE); Dr. Lange, Christoph, 10318 Berlin (DE)
(74) Vertreter: 2K Patentanwälte Blasberg Kewitz & Reichel

(56) Entgegenhaltungen:
- US-A1- 2006 133 809
- US-B1- 8 014 417

## Beschreibung

### Gebiet der Erfindung

Die vorliegende Erfindung bezieht sich auf das allgemeine Gebiet der Telekommunikation und nimmt im Speziellen Bezug auf leitungsgebundene optische Zugangsnetze.

Ziel der vorliegenden Erfindung ist es, die Bitraten pro Endkunde/Endgeräten in passiven optischen Netzen (PON) so zu wählen, dass ein zeitlich schneller, mit Umschaltzeiten weniger Bits, anpassbarer lastabhängiger Betrieb mit variablen Bitraten auf der Grundlage der zeitlich variierenden Verkehrsanforderungen unterschiedlicher angeschlossener Endgeräte ermöglicht wird, um eine verbesserte Energieeffizienz des Netzbetriebs zu erreichen.

### Hintergrund der Erfindung

Der Energiebedarf und die Energieeffizienz von Telekommunikationsnetzen haben in jüngster Vergangenheit eine zunehmende Aufmerksamkeit erfahren. Es wird mit dem Blick auf das kritische Erfordernis nachhaltiger Ressourcennutzung auch für die Zukunft erwartet, dass ein energieeffizienter Netzbetrieb unabdingbar für erfolgreiche Telekommunikationsnetzbetreiber und -diensteanbieter sein wird.

Insbesondere Zugangsnetze haben einen großen Anteil am Energiebedarf heutiger Telekommunikationsnetze, da die Netzelemente geographisch weit verteilt sind. Passive optische Netze (PON) werden von vielen Netzbetreibern als nächster Schritt in der Weiterentwicklung von Zugangsnetzen gesehen - und werden derzeit ausgebaut -, um zukunftssichere optische Zugangsnetze für hochbitratige Anwendungen zu errichten.

Deshalb ist es von besonderem praktischen Interesse für Netzbetreiber im Hinblick auf Nachhaltigkeit und Wirtschaftlichkeit, die Energieeffizienz von heutigen und zukünftigen PON-Systemen zu steigern. Eine erfolgversprechende Maßnahme ist die dynamische, also schnelle und gemäß des Lastzustandes der jeweiligen Verbindung angepasste Veränderung der, weil bei niedrigeren Geschwindigkeiten der Energieverbrauch sinkt. Während das bei einfachen Punkt-zu-Punkt-Verbindungen einfach realisiert werden kann, muss man bei Netzen, die mehrere Endpunkte im Zeitzugriffsverfahren bedienen, die Bitraten auf einander abstimmen, um möglichst jede Endstelle mit der minimal möglichen Geschwindigkeit zu betreiben. Darauf zielt die vorliegende Erfindung ab.

### Stand der Technik

Für glasfaserbasierte Zugangsnetze ist das Konzept des passiven optischen Netzes ein verbreiteter Ansatz, um kostengünstig hochbitratigen Teilnehmerzugang bereitzustellen.

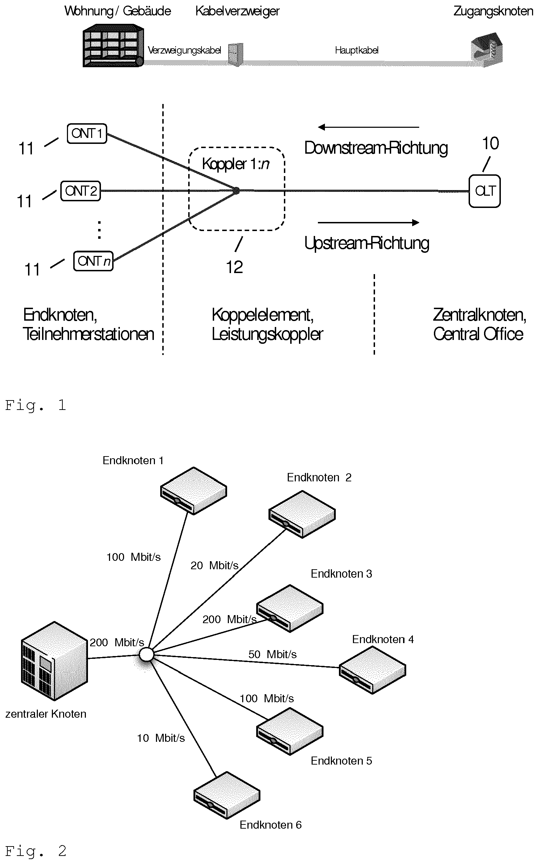

Fig. 1 zeigt in schematischer Form eine dem Stand der Technik entsprechende Anordnung. Der OLT (Optical Line Termination) 10 sendet Signale in Richtung der Teilnehmerstationen 11 (ONT, Optical Network Termination). Der Leistungskoppler 12 ist das Zentralelement des PONs und teilt das vom OLT kommende Signal im Downstream - im Zeitmultiplex - auf alle ONTs auf bzw. setzt - im Upstream - das von den ONTs kommende Signal ebenfalls im Zeitmultiplexverfahren zusammen. Ein PON besitzt also system-inhärent eine Sternstruktur - im Gegensatz zu sonst üblichen Punkt-zu-Punkt-Verbindungen -, was Auswirkungen auf das Funktionsprinzip hat. Prinzipbedingt müssen alle ONTs mit der PON-Systembitrate arbeiten, also z. B. mit 2,5 Gbit/s bei GPON-Systemen (Gigabit-capable PON, [4]), obwohl je Teilnehmer - abhängig vom Aufteilungsverhältnis 1:n - geringere Bitraten nutzbar sind. Typische Größen für n sind derzeit 32 oder 64. Grundsätzlich ist zwar auch eine Mischbetrieb mit mehreren Bitraten gemäß Patentanmeldung DE 10 2006 025 918 A1 [5] möglich, wobei allerdings kein dynamischer, lastabhängiger Betrieb angestrebt und erreichbar ist, sondern eher verschiedene feste Bitraten mehrerer Endknoten im selben Sternnetz ermöglicht werden. Es handelt sich also eher um ein Ausbauszenario, bei dem schnelle und langsamere Endstationen in einem Netz betrieben werden können - vorrangig mit dem Zweck, verschiedene PON-Systemgenerationen auf einem gemeinsamen optischen Verteilnetz betreiben zu können (und den kostenintensiven doppelten bzw. zusätzlichen Ausbau der Glasfaserinfrastruktur zu vermeiden).

Der Verkehrsbedarf je Teilnehmer fluktuiert zeitlich mitunter stark, z. B. im Verlaufe eines Tages, einer Woche oder eines Jahres. Ein vielversprechender Ansatz zur Steigerung der Energieeffizienz ist es, die tatsächlich zu übertragende (und zu verarbeitende) Bitrate dem wirklichen Verkehrsbedarf anzupassen, da der Leistungsbedarf von elektronischen und optischen Komponenten mit der zu übertragenden und zu verarbeitenden Bitrate verkoppelt ist - und z. B. bei steigender Bitrate ebenfalls steigt. Hierzu sind dynamische, zeitlich schnell wirkende Anpassungen notwendig, die die Komponenten des Netzes innerhalb einer möglichst kurzen Zeitspanne in für die jeweilige Situation optimalen Betriebszustand versetzt und möglichst ohne komplizierte Abstimmungsmechanismen zwischen den jeweiligen Endpunkten und dem zentralen Knoten auskommt.

Dem Stand der Technik entsprechend gibt es bereits Algorithmen, die für einzelne Systemtechniken Verfahrensweisen zur Steigerung der Energieeffizienz vorschlagen, z. B. beim Low-Power-Modus für ADSL/ADSL2+ (Asymmetric Digital Subscriber Line) [1] oder auch beim Energy Efficient Ethernet für elektrische Schnittstellen [3], das jedoch nicht einen Ansatz mit adaptiver Bitrate, sondern einen sogenannten "Low Power Idle"-Mechanismus beschreibt (bei dem Pakete in Zeiten geringer Verkehrsaktivität gesammelt und dann burst-artig gesendet werden). Diese Verfahren sind für elektrische Punkt-zu-Punkt-Verbindungen konzipiert, jedoch nicht für sternförmige Anordnungen, wie sie PONs aufweisen, die darüber hinaus auf dem optischen Übertragungsmedium Glasfaser arbeiten.

Bei passiven optischen Netzen gibt es derartige dynamische Verfahren mit adaptiver Bitrate, die sowohl die ONT/ONU-Seite als auch die OLT-Seite umfassen, noch nicht. Die Thematik der Energieeffizienz ist auch hier als bedeutsam erkannt worden, die vorgeschlagenen Mechanismen zur Steigerung der Energieeffizienz beziehen sich hier jedoch bisher auf die Teilnehmerseite (ONT/ONU) und fokussieren auf die Möglichkeit der Abschaltung einzelner Teilkomponenten in diesen Endknoten (ONT/ONU), wenn sie nicht benötigt werden - jedoch nicht auf die Anpassung der Bitrate an den beobachteten oder vorhergesagten Verkehr. Diese bereits bekannten Methoden sind in [2] zusammengefasst dargestellt.

Ein weiteres Verfahren zur Zuweisung von Upstream-Bandbreite eines geteilten Upstream-Kanals in einem optischen Netzwerk wird in US 8 014 417 B1 offenbart.

### Überblick über die Erfindung:

Die vorliegende Erfindung beschreibt die Nutzung unterschiedlicher Datenraten in einem sternförmigen Netz mit Zeitzugriffsverfahren (wie sie in passiven optischen Netzen derzeit üblich sind [4]), die adaptiv so gewählt werden, dass jeweils nur die niedrigste notwendige Datenrate verwendet wird, um dadurch eine Energieeinsparung zu erzielen. Geringere Datenraten sind im Allgemeinen deshalb mit geringerem Energiebedarf verknüpft, weil z. B. der Aufwand in Elektronik und Optik für die Übertragung und Verarbeitung der Daten geringer ist. Durch die Topologie des Netzes ist bedingt, dass mindestens ein Knoten gleichzeitig mit mehreren Geräten kommuniziert. Damit diese Kommunikation weiterhin im Zeitzugriffsverfahren stattfinden kann, wird die Nutzung ganzzahliger Teiler einer Maximaldatenrate vorgeschlagen. Dadurch können die verschiedenen Endpunkte des Sternnetzes bei unterschiedlichen Datenraten senden und empfangen und somit eine Energieeinsparung erzielen, wobei der zentrale Knoten immer bei der höchsten Datenrate läuft. Ein typisches System, das in einer solchen Anordnung arbeitet, ist ein PON, auf das die vorliegende Erfindung abzielt. Hierbei ist die Zahl der verwendeten Bitraten innerhalb des Netzes grundsätzlich unbegrenzt, und z. B. jeder Endknoten könnte mit einer anderen Bitrate betrieben werden, falls das notwendig wäre.

Im Einzelnen handelt es sich um ein Verfahren zur Kommunikation in einer sternförmigen Netzinfrastruktur mit einem zentralen Knoten, der mit einem oder mehreren Endknoten verbunden ist. In diesem Netzwerk gibt es eine Maximaldatenrate, die durch den zentralen Knoten bestimmt wird. Die Endknoten kommunizieren mit dem zentralen Knoten mit einem ganzzahligen Teiler der Maximaldatenrate, sodass eine Abstimmung der Knoten entfallen kann und die gesamten Daten aller Knoten in der gleichen Art und Weise gesendet und empfangen werden können, ohne z.B. eigene Rahmenstrukturen oder andere Strukturierungen nutzen zu müssen. Dadurch wird erst eine schnelle Anpassung der jeweiligen Datenraten möglich. Aufgrund des Umstandes, dass dann die Bitdauern ein Vielfaches der Grundbitdauer (1/Maximalbitrate) ist, können bei Kenntnis der Einzelbitraten zu den Endknoten, mehrere auf einander folgende Bits zusammengefasst werden und als ein Bit interpretiert werden. Der zentrale Knoten kann somit die mehrfach gesendeten identischen Bits von langsameren Endknoten auf der Basis der Kenntnis der Datenrate des Endknoten logisch zusammenfassen. Diese Anforderung an die Datenraten ist zwingend für das hier vorgeschlagene Verfahren.

Der Austausch der Geschwindigkeitsinformationen kann zu Beginn einer Verbindung erfolgen, oder auch während der Übertragung in festgelegten Intervallen. So können die Geschwindigkeitsinformationen auch in einer definierten Geschwindigkeit übermittelt werden, so dass sichergestellt wurde, dass diese korrekt beim zentralen Knoten ankommen. So kann regelmäßig z. B. in der Maximalgeschwindigkeit die Information über die Geschwindigkeit der Endknoten übermittelt werden. Es können aber auch durch Broadcastnachrichten vom zentralen Knoten die Vorgabe für die Austauschgeschwindigkeiten gemacht werden. Hierbei ist die Information über die tatsächlich verwendete Bitrate nicht unbedingt vor der Übertragung notwendig, sondern kann erst für die Interpretation der Bits verwendet werden, wenn ein Puffer zur Zwischenspeicherung verwendet wird. Diese Anpassung der jeweiligen Datenraten kann sehr schnell und oft geschehen, weil für den eigentlichen Senden und Empfang die tatsächliche Datenrate nicht zwingend bekannt sein muss und somit auch schnelle Wechsel der Datenrate möglich sind, um den Energiebedarf des Netzes möglich niedrig zu halten. Die Anpassung können innerhalb eines Taktes oder auch etwas langsamer erfolgen. Optimal wären 1-15 Takte zur Anpassung. Die Anpassung kann auf zeitlichen Beobachtungen, wie sinkenden oder steigenden Datenbedarf basieren, oder auf Vorhersagen, wie z.B. geringeren Datenraten nachts und am Wochenende. Auch ist es denkbar, dass aufgrund hoher Temperaturen die Geschwindigkeit reduziert werden soll, um zu vermeiden, das Geräte überhitzen. So können Temperaturintervalle oder Grenzen vorgegeben werden. Auch ist es denkbar, dass die Strombelastung im Stromnetz hoch ist, so dass ein geringer Verbrauch gewünscht wird. Sollte das Stromnetzwerk überlastet sein, so können Netzwerkkomponenten in ihrer Geschwindigkeit reduziert werden, um Strom zu sparen. Solche Informationen können vom Betreiber des Stromnetzwerkes erlangt werden, der eine entsprechende Schnittstelle ansteuert. So kann durch externe als auch interne Ereignisse die Geschwindigkeit angepasst werden. In der Regel wird die Geschwindigkeit auf den Netzverkehr angepasst. Der Netzverkehr kann z.B. auf eine Zeiteinheit gemessen werden. D.h. Wie viele Daten werden in einer Zeiteinheit transportiert. Basierend auf einer durchschnittlichen Erfassung kann, dann z.B. die Geschwindigkeit auf den Übertragungsbedarf angepasst werden. Die Geschwindigkeit sollte hierbei jedoch immer etwas puffer bieten, der ca. 20-50% mehr Datendurchsatz erlaubt.

Der zentrale Knoten arbeitet in der Regel mit der Maximalbitrate, kann jedoch alternativ auch mit der Bitrate des schnellsten Endknoten arbeiten, wenn dieser langsamer als die Maximalbitrate arbeitet und die anderen Bitraten weiterhin ganzzahlige Teiler dieser Bitrate darstellen.

In der bevorzugten Ausführungsform ist die Netzinfrastruktur ein PON, passives optisches Netzwerk, und der zentrale Knoten ein OLT, Optical Line Termination, und die Endknoten ONT, Optical Network Termination.

In einer bevorzugten Alternative könnten die Endgeräte mit einer 2*^{N}*-fachen Grundbitrate, mit *N* als ganze Zahl, mit dem Zentralknoten kommunizieren, wobei der Zentralknoten, mit der Datenrate des schnellsten Endgeräts arbeitet. In diesem Falle ist die Wahl der möglichen Datenraten aller Verbindungen des Netzes einfacher und flexibler, weil die Datenraten automatisch ganzzahlige Vielfache einer Grunddatenrate sind. In einer weiteren Ausführungsform wird ein System beansprucht, das im Wesentlichen das oben beschriebene Verfahren implementiert.

Das vorgeschlagene Verfahren entsprechend der vorliegenden Erfindungsbeschreibung bietet die Möglichkeit, auch in sternförmigen Netzen, wie z. B. passiven optischen Netzen, effizient adaptive Datenraten einzuführen, um Energieeinsparungen durch die jeweils niedrigere Taktung zu erzielen.

Da in PONs der Zugriff für alle Kunden über Zeitbereichszugriff, also Zeitschlitzverfahren, erfolgt, müssten sich ohne diese Methode im besten Fall alle im Netz vorhandenen Knoten auf eine Datenrate einigen, was der höchsten benötigten Datenrate entspräche - der PON-Systembitrate. Da normaler Weise immer nur sehr wenige Endgeräte zu einem bestimmten Zeitpunkt eine hohe Datenrate benötigen, würde man dadurch alle anderen im Netz befindlichen Geräte auch auf diese hohe Datenrate zwingen. Dieser Effekt wird immer größer, je mehr Endpunkte das Sternnetz aufweist. Gerade in PONs, bei denen zurzeit n = 32 bis n = 64 Kunden am zentralen Punkt (OLT) angeschlossen sind, wird derzeit über eine Erhöhung der Anschlusszahl - eine Erhöhung der Anzahl der ONTs je PON - nachgedacht, um eine wirtschaftliche Bereitstellung hochbitratiger Glasfaseranschlüsse sicherzustellen: Dadurch wird eine individuellere Zuweisung der Bitrate für jedes Endgerät immer wichtiger, aber auch schwieriger. Mit dem vorgeschlagenen Verfahren kann man diese Schwierigkeiten umgehen und durch das einfache Umschalten der Datenraten eine hohe Dynamik, also schnelles Anpassen an den jeweiligen Lastzustand, erreichen. Die Dynamik wird durch ein eigenständiges Umschalten erreicht, das vorzugsweise auf Umgebungseinflüsse und Datenmenge selbständig in kurzen Zeiträumen von wenigen Sekunden oder Bruchteilen von Sekunden reagiert. Das Umschalten kann durch den zentralen Knoten oder auch durch die Teilnehmer eingeleitet werden. Beide können durch externe oder interne Ereignisse angesteuert werden. So kann der zentrale Knoten z.B. Zeitgesteuert sind oder die Datenmengen messen, um dann entsprechend die Geschwindigkeit anzupassen.

### Figurenbeschreibung:

### Es zeigt:

Fig. 1 ein Zugangsnetz (schematisch) auf Basis eines passiven Leistungskoppler-basierten optischen Netzes.
Fig 2 ein Sternnetz mit gemischten Datenraten, die jeweils ganzzahlige Vielfache der Grundbitdauer aufweisen (beispielhafte Zahlenwerte).
Fig. 3 eine Umkodierung einzelner Bits niedrigerer Datenraten auf sich wiederholende Bits bei hoher Grunddatenrate.
Fig. 4 eine ausschließliche Verwendung von Datenraten, die das 2^{-N}-Fache der Maximaldatenrate aufweisen, jede niedrigere Datenrate kann als neue Grunddatenrate für die jeweils langsameren Verbindungen dienen.

### Beschreibung einer Ausführungsform:

Das Verfahren beruht darauf, dass die im Netz (Fig. 1) verwendeten Datenraten so gewählt werden, dass die Bitdauern (wobei die Bitdauer = 1/Datenrate ist) aller verwendeten Datenraten immer einem ganzzahligen Vielfachen einer Grundbitdauer entsprechen (Fig. 2). Diese Grundbitdauer gemäß der maximalen Datenrate (1/max. Bitrate, in diesem Beispiel 5 ns) bestimmt die höchste Datenrate (200 Mbit/s), bei der die einzelnen Netzknoten kommunizieren können. Bei Bedarf lässt sich diese Datenrate um einen ganzzahligen Faktor verringern, sodass die Bitdauer immer einem ganzzahligen Vielfachen der Grundbitdauer entspricht. Unter dieser Voraussetzung kann der zentrale Knoten - im Falle eines PONs handelt es sich um den OLT, der typischerweise in einer Vermittlungsstelle bzw. einem *Central Office, CO* untergebracht ist - zwar bei der vollen Datenrate weiter arbeiten, aber auch Verbindungen mit niedrigeren Datenraten verarbeiten.

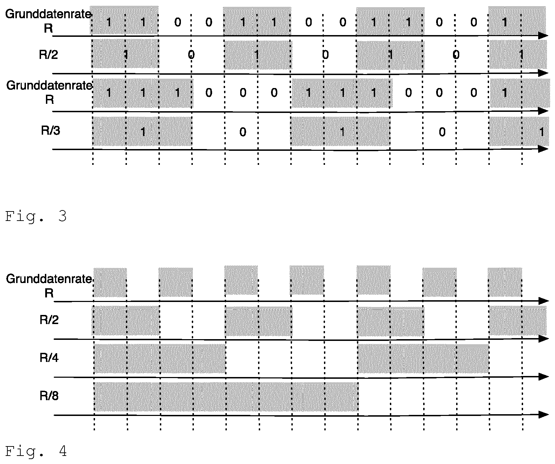

Die Möglichkeit der gleichzeitigen Verarbeitung mehrerer unterschiedlicher Bitraten des zentralen Knotens ergibt sich daraus, dass bei den niedrigeren Datenraten die Bitdauern genau einem ganzzahligen Vielfachen der Grundbitdauer entsprechen und somit sich langsamere Bits beim zentralen Empfänger durch einfache Wiederholung des jeweiligen Bits bemerkbar machen. Wenn also z. B. der zentrale Knoten bei 1 Gbit/s betrieben wird und ein Knoten sich mit 250 Mbit/s dort anmeldet, dann entspricht das der vierfachen Bitdauer von 1 Gbit/s. Damit wird jedes gesendete Bit des 250-Mbit/s-Datenstroms an der zentralen Stelle als vier Bits interpretiert, die jedoch alle denselben Wert haben. Wenn der zentrale Knoten die beabsichtigte Datenrate des Endknoten kennt, kann man auf der logischen Ebene immer vier auf einander folgende Bits durch Umkodierung zu einem logischen Bit zusammenfassen (Fig. 3). Aus diesem Grunde ist es auch notwendig, dass die Bitdauern ein ganzzahliges Vielfaches der Grundbitdauer aufweisen. Diese Forderung an die jeweiligen Bitraten ist essentiell für die schnelle adaptive Bitratenanpassung im laufenden Betrieb.

Eine weitere Verbesserungsmöglichkeit wird im Folgenden dargestellt.

Die oben beschriebene Methode ist sehr flexibel, kann aber den Nachteil haben, dass die zentrale Stelle (im Beispiel PON ist das der OLT) bei der vollen Datenrate arbeiten muss, selbst wenn alle angeschlossenen Knoten bei niedrigeren Datenraten laufen. Daher kann man das oben beschriebene Verfahren auch weiter anpassen, indem nur jeweils Datenraten zugelassen werden, die sich um den Faktor 2*^{N}* (mit *N* als ganze Zahl) von einander unterscheiden (Fig. 4). Damit ist gewährleistet, dass die zentrale Stelle auch die Datenrate adaptieren kann und diese so wählt, dass sie der maximalen geforderten Datenrate im Netz entspricht. Diese ist durch den Knoten bestimmt, der bei der höchsten Datenrate läuft. Dadurch, dass alle Bitdauern also immer das 2*^{N}*-Fache der Grundbitdauer aufweisen und die Grundbitdauer selbst auch um den Faktor 2*^{M}* (mit *M* als ganze Zahl) vergrößert werden kann, ist immer noch gewährleistet, dass die Bitdauern aller weiteren Knoten das 2*^{N-M}*-Fache der neuen Grunddatenrate aufweisen. Die zentrale Stelle kann also die Datenrate verringern und die Endknoten arbeiten weiterhin mit Bitdauern, die einem ganzzahligen Vielfachen der Grundbitdauer entsprechen, was zwingend notwendig für den Einsatz des vorgeschlagenen Verfahrens ist.

### Literatur und Quellen

[1] ITU-T Recommendation G.992.5: *Asymmetric Digital Subscriber Line (ADSL) Transceivers* - *Extended Bandwidth ADSL2 (ADSL2+).* Genf, 2005
[2] ITU-T Series G. Supplement 45: *Means and impact of GPON power saving*. White Paper, Genf, 2009
[3] IEEE Std 802.3az™-2010 (Amendment to IEEE Std 802.3™-2008): *IEEE Standard for Information technology-Telecommunications and information exchange between systems-Local and metropolitan area networks-Specific requirements. Part 3: Carrier Sense Multiple Access with Collision Detection (CSMA*/*CD) Access Method and Physical Layer Specifications. Amendment 5: Media Access Control Parameters, Physical Layers, and Management Parameters for Energy-Efficient Ethernet. LAN*/*MAN Standards Committee of the IEEE Computer Society,* Approved 30 September 2010
[4] Keiser, Gerd: FTTX - Concepts and Applications. Hoboken, NJ: Wiley, 2006 (Seite 13-14)
[5] DE 10 2006 025 918 A1: Verfahren zur Übertragung von Signalen in Systemen mit Punkt-zu-Multipunktverbindungen, Andreas Stadler, Nokia Siemens Networks, 2.6.2006

## Patentansprüche

1. Verfahren zur Energieeinsparung durch schnelle dynamisch angepasste Änderung der Bitraten in einer sternförmigen Netzinfrastruktur mit einem zentralen Knoten (10), der mit einem oder mehreren Endknoten (11) verbunden ist,
**gekennzeichnet durch** eine Grundbitdauer gemäß der Maximaldatenrate, die durch den zentralen Knoten (10) bestimmt wird, wobei
der Endknoten (11) mit dem zentralen Knoten (10) ausschließlich mit einer Datenrate gemäß einem ganzzahligen Teiler der Maximaldatenrate kommuniziert, die kleiner oder gleich der Maximalbitrate ist, wodurch die Datenraten der einzelnen Verbindungen zwischen dem zentralem Knoten (10) und den jeweiligen Endknoten (11) hierbei alle verschieden sein können
und wobei der zentrale Knoten (10) die mehrfach gesendeten identischen Bits von langsameren Endknoten (11) auf der Basis der Kenntnis der Datenrate des Endknotens (11) logisch zusammenfasst.

2. Das Verfahren nach dem vorhergehenden Anspruch, wobei der zentrale Knoten (10) mit der Bitrate des schnellsten Endknoten (11) kommuniziert, jedoch maximal mit der Maximalbitrate.

3. Das Verfahren nach einem oder mehreren der vorhergehenden Ansprüche, wobei der zentrale Knoten (10) und die Endknoten (11) die Informationen über die benötigte Geschwindigkeit austauschen und die nächst höhere gemeinsame Datenrate wählen, die ein ganzzahliger Teiler der Maximaldatenrate ist.

4. Das Verfahren nach einem oder mehreren der vorhergehenden Ansprüche, wobei die Netzinfrastruktur ein PON, passives optisches Netzwerk, ist und der zentrale Knoten (10) ein OLT, Optical Line Termination, und die Endknoten (11) ONT, Optical Network Termination.

5. Das Verfahren nach einem oder mehreren der vorhergehenden Ansprüche, wobei die Endgeräte (11) zwingend mit einer 2^{-N}-Fachen der Maximalbitrate, mit N als ganze Zahl, mit dem Zentralknoten (10) kommunizieren.

6. Das Verfahren nach dem vorhergehenden Anspruch, wobei der Zentralknoten (10), mit der Datenrate des schnellsten Endgeräts (11) läuft.

7. Netzinfrastruktur mit lastabhängigem Energieverbrauch, die sternförmig aufgebaut ist, mit einem zentralen Knoten (10), der mit einem oder mehreren Endknoten (11) verbunden ist,
**gekennzeichnet durch** eine Grundbitdauer gemäß der Maximalbitrate, die durch den zentralen Knoten (10) bestimmt wird, wobei
die Endknoten (11) und der zentrale Knoten (10) so ausgebildet sind, dass alle jeweils mit einem ganzzahligen Teiler der Maximalbitrate kommunizieren, der kleiner oder gleich der Maximalbitrate ist und deren Datenraten zeitlich variiert werden können, wodurch die Datenraten der einzelnen Verbindungen zwischen dem zentralen Knoten (10) und den jeweiligen Endknoten (11) alle verschieden sein können und wobei der zentrale Knoten (10) eingerichtet ist, um die mehrfach gesendeten identischen Bits von langsameren Endknoten (11) auf der Basis der Kenntnis der Datenrate des Endknotens (11) logisch zusammenzufassen.

8. Netzinfrastruktur nach dem vorhergehenden Netzinfrastrukturanspruch, wobei der zentrale Knoten (10) mit der Bitrate des schnellsten Endknoten (11) kommuniziert, jedoch maximal mit der Maximalbitrate.

9. Netzinfrastruktur nach einem oder mehreren der vorhergehenden Netzinfrastrukturansprüche, wobei der zentrale Knoten (10) und die Endknoten (11) eingerichtet sind, um die Informationen über die Geschwindigkeit auszutauschen und die nächst höhere gemeinsame Datenrate wählen, die ein ganzzahliger Teiler der Maximaldatenrate ist.

10. Netzinfrastruktur nach einem oder mehreren der vorhergehenden Netzinfrastrukturansprüche, wobei die Netzinfrastruktur ein PON, passives optisches Netzwerk, ist und der zentrale Knoten (10) ein OLT, Optical Line Termination, und die Endknoten (11) ONT, Optical Network Termination.

11. Netzinfrastruktur nach einem oder mehreren der vorhergehenden Netzinfrastruktur Ansprüche, wobei die Endgeräte (11) eingerichet sind, um mit Umschaltzeiten von wenigen Bitdauern dynamisch anpassbar bei einer 2*^{N}* -fachen Grundbitrate, mit *N* als ganze Zahl, mit dem Zentralknoten (10) zu kommunizieren.

12. Netzinfrastruktur nach dem vorhergehenden Netzinfrastrukturanspruch, wobei der Zentralknoten (10), mit der Datenrate des schnellsten Endgeräts (11) läuft.

## Claims

1. A method for energy saving by fast dynamically adapted change of bit rates in a star-shaped network infrastructure having a central node (10) connected to one or more end nodes (11),
**characterized by** a basic bit duration according to a maximum data rate determined by the central node (10), wherein
the end node (11) communicates with the central node (10) exclusively with a data rate according to an integer divisor of the maximum data rate, which is smaller than or equal to the maximum bit rate, whereby the data rates of the respective connections between the central node (10) and the respective end nodes (11) can all be different and wherein the central node (10) logically combine the multiply sent identical bits of slower end nodes (11) based on the knowledge of the data rate of the end node (11) .

2. The method according to the preceding claim, wherein the central node (10) communicates at the bit rate of the fastest end node (11), but at most with the maximum bit rate.

3. The method according to one or more of the preceding claims, wherein the central node (10) and the end nodes (11) exchange the information about the required speed and select the next higher common data rate, which is an integer divisor of the maximum data rate.

4. The method according to one or more of the preceding claims, wherein the network infrastructure is a PON, passive optical network, and the central node (10) is an OLT, optical line termination, and the end nodes (11) are ONT, optical network termination.

5. The method according to one or more of the preceding claims, wherein the terminals (11) must communicate with the central node (10) with a 2^{-N}-fold of the maximum bit rate, with N as an integer.

6. The method according to the preceding claim, wherein the central node (10) runs at the data rate of the fastest terminal (11).

7. A network infrastructure constructed with load-dependent power consumption, which is configured in a star-shape, comprising a central node (10) connected to one or more end nodes (11),
**characterized by** a basic bit duration according to a maximum bit rate defined by the central node (10), wherein the end nodes (11) and the central node (10) are configured such that each communicate at with an integer divisor of the maximum bit rate, which is less than or equal to the maximum bit rate and whose data rates can be varied in time, whereby the data rates of the individual connections between the central node (10) and the respective end nodes (11) can all be different and wherein the central node (10) is configured to logically combine the multiply sent identical bits of slower end nodes (11) based on the knowledge of the data rate of the end node (11).

8. Network infrastructure according to the preceding network infrastructure claim, wherein the central node (10) communicates with the bit rate of the fastest end node (11), but at most with the maximum bit rate.

9. Network infrastructure according to one or more of the previous network infrastructure claims, wherein the central node (10) and the end nodes (11) are configured to exchange information about the speed and select the next higher common data rate, which is an integer divisor of the maximum data rate.

10. A network infrastructure according to one or more of the preceding network infrastructure claims, wherein the network infrastructure is a PON, passive optical network, and the central node (10) is an OLT, optical line termination, and the end nodes (11) are ONT, optical network termination.

11. Network infrastructure after one or more previous network infrastructure requirements, wherein the terminals (11) are arranged to communicate dynamically adaptable with the central node (10) with switching times of a few bit durations at a 2*^{N}*-fold basic bit rate, with *N* as an integer.

12. Network infrastructure according to the previous network infrastructure claim, wherein the central node (10) runs at the data rate of the fastest terminal (11).

## Revendications

1. Un procédé d'économie d'énergie en adaptant rapidement et dynamiquement les débits dans une infrastructure de réseau en étoile disposant d'un noeud central (10) connecté à un ou plusieurs noeuds d'extrémité (11),
**caractérisé par** une durée de bit de base en fonction du débit de données maximum déterminé par le noeud central (10),
dans lequel
le noeud d'extrémité (11) communique avec le noeud central (10) communique exclusivement à un débit de données en fonction d'un diviseur entier du débit de données maximal, qui est inférieur ou égal au débit binaire maximal, par lequel les débits de données des connexions respectives entre le noeud central (10) et les noeuds d'extrémité respectifs (11) peuvent être tous différents, et par lequel le noeud central (10) combine logiquement les multiples bits identiques transmis des noeuds d'extrémité (11) les plus lents sur la base de la connaissance du débit de données du noeud d'extrémité (11).

2. Le procédé selon la revendication précédente, dans lequel le noeud central (10) fonctionne au débit binaire du noeud d'extrémité le plus rapide (11), mais au maximum au débit binaire maximal.

3. Le procédé selon l'une ou plusieurs des revendications précédentes, dans lequel le noeud central (10) et les noeuds d'extrémité (11) échangent les informations sur la vitesse requise et sélectionnent le débit de données commun suivant supérieur qui est un diviseur de nombre entier du débit de données maximal.

4. Le procédé selon une ou plusieurs des revendications précédentes, dans lequel l'infrastructure de réseau est un réseau optique passif, PON, et le noeud central (10) est une terminaison de ligne optique, OLT, et les noeuds d'extrémité (11) sont des des terminaisons de réseau optiques, ONT.

5. Le procédé selon l'une ou plusieurs des revendications précédentes, dans lequel les terminaux (11) communiquent nécessairement avec le noeud central (10) avec un débit 2^{-N} ième du débit binaire maximal, avec N étant un entier.

6. Le procédé selon la revendication précédente, dans lequel le noeud central (10) est au débit de données du terminal (11) le plus rapide.

7. Une Infrastructure de réseau à consommation électrique dépendante de la charge, qui est configurée suivant une topologie en étoile, comprenant un noeud central (10) connecté à un ou plusieurs noeuds d'extrémité (11),
**caractérisé par** une durée de bit de base en fonction du débit binaire maximum déterminé par le noeud central (10), dans lequel les noeuds d'extrémité (11) et le noeud central (10) sont configurés de façon à ce que chacun communique à un diviseur entier du débit binaire maximal, qui est inférieur ou égal au débit binaire maximal et dont les débits de données peuvent varier dans le temps, par lequel les débits de données des connexions individuelles entre le noeud central (10) et les noeuds d'extrémité respectifs (11) peuvent être tous différents, et par lequel le noeud central (10) est configuré pour combine logiquement les multiples bits identiques transmis des noeuds d'extrémité (11) les plus lents sur la base de la connaissance du débit de données du noeud d'extrémité (11).

8. L'infrastructure de réseau selon la revendication d'infrastructure de réseau précédente, dans laquelle le noeud central (10) communique avec le débit binaire du noeud d'extrémité le plus rapide (11), mais sans dépasser le débit binaire maximal.

9. L'infrastructure de réseau selon l'une ou plusieurs des revendications d'infrastructure de réseau précédentes, dans laquelle le noeud central (10) et les noeuds d'extrémité (11) sont agencés pour échanger les informations sur la vitesse et sélectionner le débit de données commun suivant supérieur qui est un diviseur entier du débit de données maximum.

10. L'infrastructure de réseau selon une ou plusieurs des revendications d'infrastructure de réseau précédentes, dans laquelle dans lequel l'infrastructure de réseau est un réseau optique passif, PON, et le noeud central (10) est une terminaison de ligne optique, OLT, et les noeuds d'extrémité (11) sont des terminaisons de réseau optiques, ONT.

11. L'infrastructure de réseau selon l'une ou plusieurs des revendications d'infrastructure de réseau précédentes, dans lequel les terminaux (11) communiquent nécessairement de manière dynamiquement ajustable avec le noeud central (10) avec des instant de commutation de durées de quelques bits, avec un débit 2^{-N} ième du débit binaire maximal, avec N étant un entier.

12. L'infrastructure de réseau selon la revendication d'infrastructure de réseau précédente, dans lequel le noeud central (10) est au débit de données du terminal (11) le plus rapide.
